# EUROPÄISCHE PATENTANMELDUNG

(11) **EP 3 828 449 A1**
(43) Veröffentlichungstag der Anmeldung: **02.06.2021**
(21) Anmeldenummer: 20199728.5
(22) Anmeldetag: 02.10.2020
(51) Int. Cl.: F16K 17/38, A62C 2/20, A62C 2/24, F24F 11/33

(54) **VORRICHTUNG ZUM AUFLÖSEN EINES BETÄTIGUNGSELEMENTES**

(30) Priorität: 27.11.2019 DE 102019132152
(71) Anmelder: SCHAKO Klima Luft Ferdinand Schad KG, 78600 Kolbingen (DE)
(72) Erfinder: VÖGELI, Beat, 8248 Uhwiesen (CH)
(74) Vertreter: Patentanwälte und Rechtsanwalt Weiß, Arat & Partner mbB

(57) **Zusammenfassung**

Die Erfindung betrifft eine Vorrichtung zum Auslösen eines Betätigungselementes (5), welches von einer Sicherung (6) in einer Haltelage gehalten ist, wobei zwischen der Sicherung (6) und dem Betätigungselement (5) ein Befestigungsmittel vorgesehen ist, welches auf eine Temperaturänderung reagiert und das Betätigungselement (5) in eine Arbeitslage entlässt, wobei eine Oberfläche der Sicherung (6) durch Vorsprünge (16) und/oder Einformung erhöht ist.

## Beschreibung

Die vorliegende Erfindung betrifft eine Vorrichtung zum Auslösen eines Betätigungselementes, welches von einer Sicherung in einer Haltelage gehalten ist, wobei zwischen der Sicherung und dem Betätigungselement ein Befestigungsmittel vorgesehen ist, welches auf eine Temperaturänderung reagiert und das Betätigungselement in eine Arbeitslage entlässt.

### Stand der Technik

Derartige Vorrichtungen sind in vielfältiger Form und Ausführung bekannt und auf dem Markt. Vor allem werden sie in der Lüftungs- und Klimatechnik benötigt, auf die sich die vorliegende Erfindung besonders bezieht, jedoch nicht beschränkt ist. Die Erfindung ist auf allen möglichen Gebieten der Technik anwendbar.

Auf dem Gebiete der Lüftungs- und Klimatechnik werden solche Sicherungen vor allem zur Feuer- bzw. Rauchabschottung benötigt. Beispielsweise werden sie in Brandschutzklappen oder auch Tellerventilen eingesetzt, um im Brandfall entsprechende Öffnungen zu einem Raum hin zu verschliessen, damit ein Feuer nicht auf diesen Raum übergreifen kann bzw. dieser Raum nicht mit Rauch geflutet wird.

Eine derartige Sicherung ist beispielsweise aus der DE 199 11 246 B4 bekannt. Dabei handelt es sich um eine Feuerschutz- Absperrvorrichtung für Lüftungskanäle, bestehend aus einem Einbaugehäuse mit einem darin angeordneten Ventilsitz und einem unter Federbeaufschlagung in Offenstellung gehaltenen Ventilschliesskörper, der bei vorgegebener Temperatur in Schliessstellung schnellt, wobei der Ventilschliesskörper eine von einer Schliessfeder umgebene Ventilstange aufweist, wobei der Ventilstange eine Arretierungsvorrichtung zugeordnet ist, welche die Ventilstange und über die Ventilstange den in Schliessstellung befindlichen Ventilschliesskörper arretiert, wobei die Ventilstange in einer den Einbaugehäusequerschnitt überbrückenden Halterung geführt ist, und wobei die Halterung als Arretierungsvorrichtung einen Hohlkegel für den Eingriff eines auf der Ventilstange angeordneten Arretierungskegels aufweist.

Des Weiteren ist aus der EP 1 762 276 B1 eine Auslöseeinrichtung zum Auslösen zumindest eines eine Leitung eines lufttechnischen Systems verschliessenden Absperrelementes und/oder freigebenden Entrauchungselementes bekannt. Auch hier wird ein thermisch entriegelbares Halteorgan, das mit einer Antriebseinrichtung für das Absperrungselement in das Absperrelement im normalen Betriebsfall in offener Stellung haltender bzw. das Entrauchungselement in geschlossener Stellung haltender Wirkverbindung steht, wobei das Halteorgan eine stiftartige, gekapselte Bauform aufweist und in das Innere der Leitung vorsteht. Das Halteorgan ist als Hohlprofil ausgebildet, auf dessen in der Leitung befindliches freies Ende eine Kappe aufgesetzt ist. Diese Kappe ist aus dünnwandigen Materialien ausgebildet, ebenso ist das Hohlprofil aus dünnwandigen Materialien gebildet. Hierdurch soll bei einer strömungsgünstigen Anordnungsmöglichkeit im Inneren der Leitung eine zuverlässige Auslösung des Absperrungselementes gewährleistet sein. Allerdings hat diese Ausgestaltung den Nachteil, dass durch die Dünnwandigkeit des Hohlprofils die gesamte Anordnung sehr instabil ist.

### Aufgabe

Der vorliegenden Erfindung liegt die Aufgabe zugrunde, eine Sicherung zu schaffen, die sehr einfach aufgebaut ist und auf sehr einfache Art und Weise montiert werden kann. Ferner soll sie sehr stabil sein, trotzdem aber eine möglichst gute Wärmeleitfähigkeit aufweisen.

### Lösung der Aufgabe

Zur Lösung der Aufgabe führt zum einen, dass eine Oberfläche der Sicherung durch Vorsprünge und/oder Einformung erhöht ist.

Die Erhöhung der Oberfläche der Sicherung hat den großen Vorteil, dass sie die Oberfläche eines Elementes wesentlich erhöhen. Dadurch wird eine Temperaturänderung, insbesondere eine Erhöhung der Temperatur, von dem entsprechenden Element sehr viel schneller und intensiver aufgenommen und auch weitergeleitet. Für den vorliegenden Fall bedeutet dies, dass die Temperaturänderung sehr viel schneller zu einer Verbindungsstelle geleitet wird, welche auf die Temperaturänderung reagieren soll. In der Regel handelt es sich dabei um eine Erhöhung der Temperatur, wie beispielsweise bei einem Feuer. Sicherlich sind aber auch Sicherungen denkbar, die bei einer Erniedrigung der Temperatur auslösen. Auch diese sollen von dem vorliegenden Erfindungsgedanken umfasst sein.

Beispielsweise kann die Erhöhung der Oberfläche durch die Ausformung von Heizrippen erfolgen. Bevorzugt besteht dann die erfindungsgemässe Sicherung aus einer Hülse und einem Deckelelement, wobei das Deckelelement die Heizrippen aufweist. Natürlich ist auch denkbar, dass die Hülse Heizrippen aufweist, die denselben Zweck erfüllen, wie die Heizrippen, die aus dem Deckelelement herausgeformt sind. Die Anordnung der Heizrippen im Deckelelement erscheint allerdings fertigungstechnisch einfacher.

Deckelelement und Hülse werden auf sehr einfache Art und Weise miteinander verbunden, indem beispielsweise dem Deckelelement ein Ringkragen angeformt ist, der in die Hülse eingesetzt werden kann. Zwischen Hülse und Deckelelement wird dann zum Beispiel ein Schmelzlot eingebracht, durch welches Hülse und Deckelelement miteinander verbunden werden. Im Falle einer Erhöhung der Temperatur schmilzt dieses Schmelzlot, so dass die Verbindung zwischen Deckelelement und Hülse aufgehoben wird.

Bevorzugt soll das Betätigungselement an dem Deckelelement angeordnet sein. Es ist von einem Kraftspeicher umfangen, der sich einerseits ortsfest abstützt und andererseits gegen das Deckelelement drückt. Wird somit die Verbindung zwischen dem Deckelelement und der Hülse aufgehoben, schnellt das Deckelelement nach oben und nimmt dabei das Betätigungselement in zum Beispiel eine Schliessstellung oder eine Öffnungsstellung mit. Diese Anordnung ist ausserordentlich einfach ausgestaltet, aber hat sich in der Praxis als hervorragend geeignet bewährt.

Wenn im vorliegenden Fall von einem Kraftspeicher gesprochen wird, so ist in erster Linie an eine Schraubenfeder gedacht. Vom Erfindungsgedanken sollen jedoch auch andere Kraftspeicher umfasst sein, die gewährleisten, dass bei der Aufhebung der Verbindung zwischen Deckelelement und Hülse das Deckelelement zusammen mit dem Betätigungselement in eine andere Gebrauchslage schnellt.

Bei einem anderen Ausführungsbeispiel der Erfindung, für das auch separat Schutz begehrt werden soll, jedoch auch im Zusammenhang mit der Erhöhung der Oberfläche der Sicherung, ist vorgesehen, dass dem Betätigungselement ein Einsatz zugeordnet ist, der bei der Temperaturänderung einem Druck des Betätigungselementes nachgibt. Bevorzugt sitzt hierzu in einer Bohrung der Sicherung ein Einsatz, der auf eine Temperaturänderung reagiert. Ferner greift in diese Bohrung auch ein Teil des Betätigungselementes, z.B. seine Spitze ein und drückt auf den Einsatz. Erhöht sich beispielsweise die Temperatur um die Sicherung herum über ein gewisses Mass, welches zum zumindest teilweisen Schmelzen des Einsatzes führt, wird dieser bzw. ein Teil von ihm schmelzflüssig und kann mit Hilfe des Betätigungselementes beispielsweise aus einem Auslass der Sicherung ausgestossen werden. Es genügt somit, wenn beispielsweise in die Bohrung der Sicherung ein Drahtstift, Stift, Pellet oder Plättchen eingelegt wird.

Vor allem kann aber auch durch die Wahl der Weite des Auslasses bestimmt werden, wann das Betätigungselement auslöst. Wird der Auslass z.B. sehr eng gehalten, muss das Betätigungselement viel schmelzflüssiges Material des Einsatzes aus dem Auslass herausdrücken, was einige Zeit in Anspruch nimmt. Wird dagegen die Öffnung sehr weit gehalten, erfolgt das Ausdrücken sehr schnell, wobei es z.B. auch genügt, wenn in diesem Fall nur die Randbereiche des Einsatzes zur Schmelzflüssigkeit erwärmt werden. Hier sind viele Möglichkeiten denkbar und sollen von der vorliegenden Erfindung umfasst sein.

Ein weiterer Erfindungsgedanke, für den auch selbstständig Schutz begehrt wird, befasst sich mit einer Vorrichtung zum Auslösen eines Betätigungselementes, welches von einer Sicherung in einer Haltelage gehalten ist, wobei zwischen der Sicherung und dem Betätigungselement ein Befestigungsmittel vorgesehen ist, welches auf eine Temperaturänderung reagiert und das Betätigungselement in eine Arbeitslage entlässt, wobei die Sicherung eine Befestigungshülse aufweist und in die Befestigungshülse ein Teil eines Bajonettverschlusses eingeformt ist. Die Befestigungshülse ist auf eine ortsfeste Hülse aufsetzbar, die einen anderen Teil eines Bajonettverschlusses aufweist. Hierdurch wird eine ausserordentlich einfache aber sichere Festlegung der Sicherung an beispielsweise einer Brandschutzklappe oder einem Lüftungskanal gewährleistet. Dies ergibt eine wesentliche Zeitersparnis bei der Montage bzw. Demontage der Sicherung.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** einen schematisch dargestellten Querschnitt durch ein Tellerventil mit einer erfindungsgemässen Vorrichtung zum Auslösen eines Betätigungselementes;
**Figur 2** den schematisch dargestellten Querschnitt gemäß Figur 1 in einer weiteren Gebrauchslage;
**Figur 3** eine gegenüber Figur 1 um 90° gedrehte Seitenansicht einer erfindungsgemässen Sicherung;
**Figur 4** einen Längsschnitt durch einen Teil eines weiteren Ausführungsbeispiels einer erfindungsgemässen Sicherung;
**Figur 5** einen Längsschnitt durch einen Teil eines weiteren Ausführungsbeispiels einer erfindungsgemässen Sicherung.

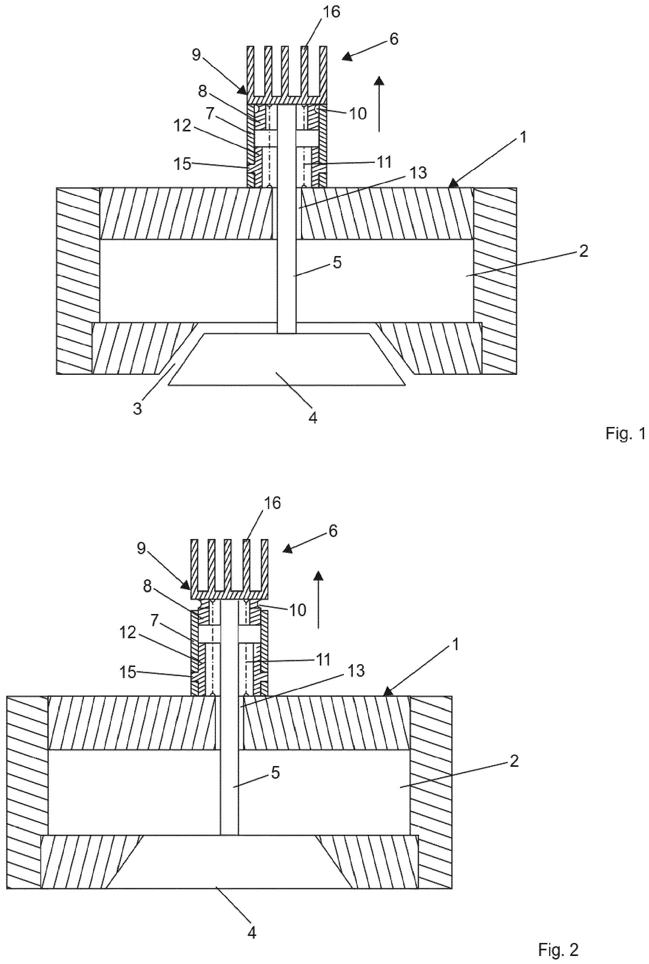

In Figur 1 und 2 ist ein sogenanntes Tellerventil für einen Luftkanal 1 gezeigt. In diesem Luftkanal 1 wird in einem Kanal 2 Luft herangeführt, welche dann ganz oder zum Teil aus einer Luftöffnung 3 austritt. Diese Luftöffnung 3 ist in normaler Gebrauchslage offen, kann aber bei einer vorgegebenen Situation durch einen Teller 4 geschlossen werden. Zu diesem Zweck ist der Teller 4 über ein Betätigungselement 5 mit einer insgesamt als Sicherung 6 bezeichneten Einrichtung verbunden.

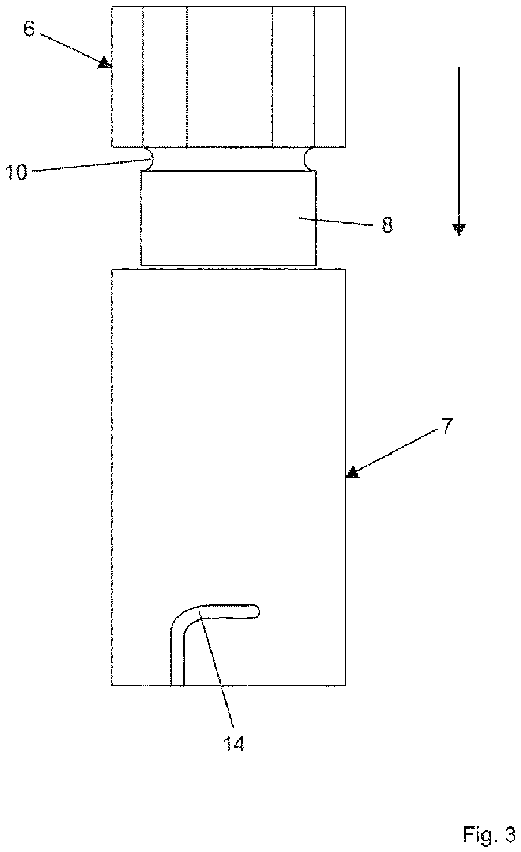

Die Sicherung 6 weist gemäss Figur 3 eine Hülse 7 auf, in die ein Ringkragen 8 eines Deckelelementes 9 eingreift. Zwischen der Hülse 7 und dem Ringkragen 8 ist eine Ringnut 10 vorgesehen, in die ein Schmelzlot eingefüllt ist, welches das Deckelelement 9 mit dem Ringkragen 8 in der Hülse 7 hält.

Das Betätigungselement 5 wird von einem Kraftspeicher umfangen, der sich einerseits gegen den Luftkanal 1 und andererseits gegen das Deckelelement 9 abstützt.

Die Funktionsweise der vorliegenden Erfindung ist folgende:
Das Betätigungselement 5 wird mit dem Deckelelement 6 beispielsweise durch Aufschrauben verbunden. Danach wird die Hülse 7 auf den Ringkragen 8 aufgesetzt, wobei kurz davor ein flüssiges Schmelzlot in die Ringnut 10 eingefüllt wird. Erkaltet dieses Schmelzlot, werden das Deckelelement 9 und die Hülse 7 miteinander verbunden. Nunmehr wird ein Kraftspeicher 11 in den Ringkragen 8 eingesetzt, so dass er das Betätigungselement 5 umfängt.

Diese gesamte Anordnung wird nunmehr auf den Luftkanal 1 aufgesetzt, wobei die Hülse 7 mit einer Befestigungshülse 12 in Wirkverbindung gebracht wird. Die Befestigungshülse 12 ist auf dem Luftkanal 1 festgelegt und umfängt eine Öffnung 13, die in den Kanal 2 einmündet.

Die Wirkverbindung zwischen Befestigungshülse 12 und Hülse 7 erfolgt über einen Bajonettverschluss, wobei im vorliegend gezeigten Ausführungsbeispiel zumindest eine Bajonettkulisse in die Hülse 7 eingeformt ist, in welche ein Stift 15, der von der Befestigungshülse 12 abragt, eingeführt werden kann.

Nach der so erfolgten Festlegung der Sicherung 6 auf dem Luftkanal 1 durchgreift das Betätigungselement 5 die Öffnung 13 und den Kanal 2, wobei dann auf das gegenüberliegende Ende des Betätigungselements 5 der Teller 4 aufgeschraubt wird. Dieser Teller 4 ist von einer entsprechend konisch geformten Öffnung in dem Luftkanal 1 durch die ringförmige Luftöffnung 3 getrennt. Durch diese Luftöffnung 3 kann Luft aus dem Kanal 2 in einen anderen Raum gelangen.

Erfolgt nun in der Umgebung der Sicherung 6 eine Temperaturänderung, so wird diese Temperaturänderung infolge von Heizrippen 16, die aus dem Deckelelement 9 herausgeformt sind, infolge der Vergrösserung der Oberfläche sehr schnell aufgenommen und dem Schmelzlot in der Ringnut 10 zugeführt. Dieses Schmelzlot erwärmt sich, wodurch die Verbindung zwischen dem Deckelelement 9 und der Hülse 7 aufgehoben wird, so dass das Deckelelement 9 von der Hülse 7 abspringt, und zwar unter der Kraft des Kraftspeichers 11. Dabei nimmt das Deckelelement 9 über das Betätigungselement 5 den Teller 4 mit, so dass dieser die Luftöffnung 3 schliesst und somit kein Rauch oder auch Feuer in einen weiteren Raum gelangen kann.

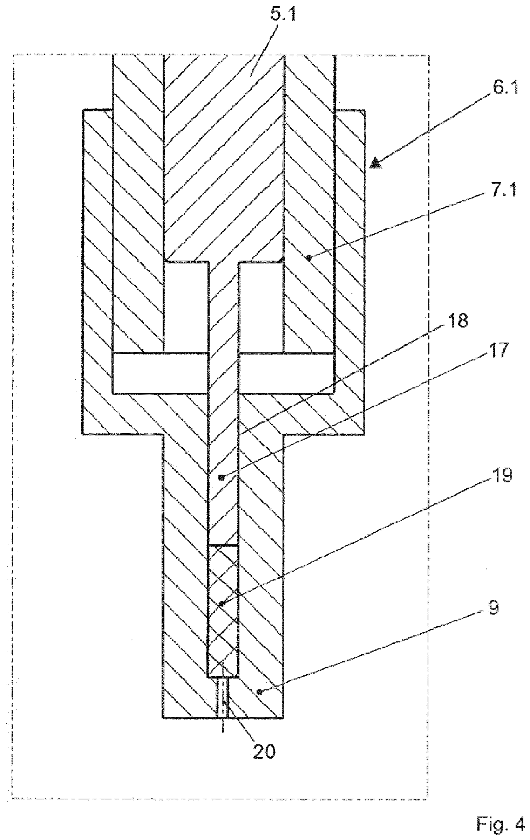

Bei einem weiteren Ausführungsbeispiel einer erfindungsgemässen Sicherung ist in Figur 4 nur ein geschnittener Bereich aus der Spitze eines Betätigungselementes 5.1 dargestellt. Das entsprechende Bestätigungselement 5.1 wird in einer Hülse 7.1 geführt, die, wie die Hülse 7 in Figur 1 und 2, dem Luftkanal 1 aufgesetzt ist. Ferner greift das Betätigungselement 5.1 mit einer Spitze 17 in eine Bohrung 18 in der Sicherung 6.1 ein. In dieser Bohrung 18 ist die Spitze 17 gleitend geführt.

Im vorderen Ende der Bohrung 18 ist ein Einsatz 19 erkennbar, auf den die Spitze 17 drückt. Dieser Einsatz 19 reagiert auf Temperaturänderungen. Insbesondere schmilzt er bei Überschreiten einer vorgegebenen Temperatur. Beispielsweise kann es sich um ein Drahtstück aus einer niedrig schmelzenden Legierung handeln. Vor dem Einsatz 19 ist ein Auslass 20 erkennbar, der in die Spitze der Sicherung 6.1 eingeformt ist.

Insgesamt ist die Sicherung 6.1 im gezeigten Ausführungsbeispiel einstückig ausgebildet und auf die Hülse 7.1 aufgesetzt, wobei sie ebenfalls eine oben beschriebene Bajonettverbindung mit der Hülse 7.1 eingehen kann.

Die Funktionsweise dieses Ausführungsbeispiel ist folgende:
Die Sicherung 6.1 wird auf die Hülse 7.1 aufgesetzt und mit dieser verbunden, beispielsweise durch eine Bajonettverbindung. Dabei greift das Betätigungselement 5.1 mit seiner Spitze 17 in die Bohrung 18 der Sicherung 6.1 ein, wobei vorab in die Bohrung 18 der Einsatz 19 eingesetzt ist.

Erwärmt sich nun der Einsatz 19 und schmilzt, so drückt das Betätigungselement 5.1 mit seiner Spitze 17 auf den schmelzenden Einsatz 19 und stösst diesen aus dem Auslass 20 aus. Hierdurch fährt die Spitze 17 weiter in die Bohrung 18 ein und das Betätigungselement 5.1 löst eine, wie auch immer geartete Betätigung von Elementen aus. Damit das Betätigungselement 5.1 sich bewegt, steht es unter dem Druck eines Kraftspeichers, beispielsweise einer entsprechenden Schraubenfeder.

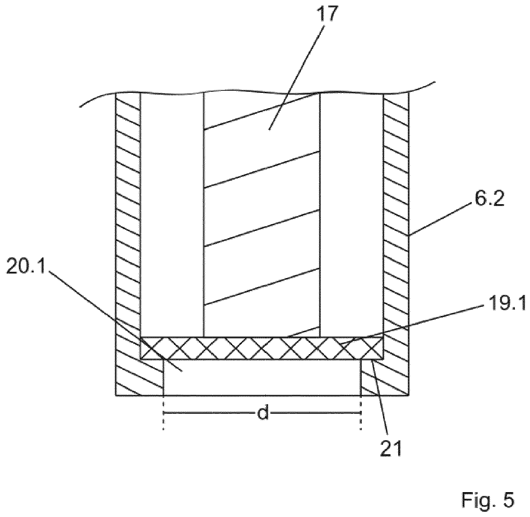

In Figur 5 ist auch gezeigt, dass ein Auslass 20.1 einen wesentlich grösseren Durchmesser d aufweisen kann und eine Schulter 21 für einen Einsatz 19.1 ausbildet. Für einige Anwendungen könnte dieses Ausführungsbeispiel erhebliche Vorteile haben, da es genügt, wenn nur der Randbereich des Einsatzes 19.1 erwärmt bzw. aufgeschmolzen wird, da dann bereits unter dem Druck der Spitze 17 der Einsatz 19.1 durch den Auslass 20.1 hindurchgestossen wird und es zu einem früheren Auslösen des Betätigungselementes kommen könnte.

**Bezugszeichenliste**

| | | | | | |
|---|---|---|---|---|---|
| 1 | Luftkanal | 34 | | 67 | |
| 2 | Kanal | 35 | | 68 | |
| 3 | Luftöffnung | 36 | | 69 | |
| 4 | Teller | 37 | | 70 | |
| 5 | Betätigungselement | 38 | | 71 | |
| 6 | Sicherung | 39 | | 72 | |
| 7 | Hülse | 40 | | 73 | |
| 8 | Ringkragen | 41 | | 74 | |
| 9 | Deckelelement | 42 | | 75 | |
| 10 | Ringnut | 43 | | 76 | |
| 11 | Kraftspeicher | 44 | | 77 | |
| 12 | Befestigungshülse | 45 | | 78 | |
| 13 | Öffnung | 46 | | 79 | |
| 14 | Bajonettkulisse | 47 | | | |
| 15 | Stift | 48 | | | |
| 16 | Heizrippe | 49 | | | |
| 17 | Spitze | 50 | | | |
| 18 | Bohrung | 51 | | | |
| 19 | Einsatz | 52 | | | |
| 20 | Auslass | 53 | | | |
| 21 | Schulter | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Auslösen eines Betätigungselementes (5), welches von einer Sicherung (6) in einer Haltelage gehalten ist, wobei zwischen der Sicherung (6) und dem Betätigungselement (5) ein Befestigungsmittel vorgesehen ist, welches auf eine Temperaturänderung reagiert und das Betätigungselement (5) in eine Arbeitslage entlässt,
**dadurch gekennzeichnet,**
**dass** eine Oberfläche der Sicherung (6) durch Vorsprünge (16) und/oder Einformung erhöht ist.

2. Vorrichtung zum Auslösen eines Betätigungselementes (5.1), welches von einer Sicherung (6.1, 6.2) in einer Haltelage gehalten ist, wobei zwischen der Sicherung (6.1, 6.2) und dem Betätigungselement (5.1) ein Befestigungsmittel vorgesehen ist, welches auf eine Temperaturänderung reagiert und das Betätigungselement (5.1) in eine Arbeitslage entlässt, **dadurch gekennzeichnet**, dem Betätigungselement (5.1) ein Einsatz (19,19.1) zugeordnet ist, der bei der Temperaturänderung einem Druck des Betätigungselementes (5.1) nachgibt.

3. Vorrichtung zum Auslösen eines Betätigungselementes (5, 5.1), welches von einer Sicherung (6, 6.1,6.2) in einer Haltelage gehalten ist, wobei zwischen der Sicherung (6, 6.1,6.2) und dem Betätigungselement (5, 5.1) ein Befestigungsmittel vorgesehen ist, welches auf eine Temperaturänderung reagiert und das Betätigungselement (5, 5.1) in eine Arbeitslage entlässt, wobei die Sicherung (6, 6.1,6.2) eine Hülse (7, 7.1) aufweist, **dadurch gekennzeichnet, dass** in oder an die/der Hülse (7, 7.1) ein Teil (14, 15) eines Bajonettverschlusses vorgesehen ist.

4. Vorrichtung nach Anspruch 2, **dadurch gekennzeichnet, dass** die Hülse (7, 7.1) auf eine ortsfeste Befestigungshülse (12) aufsetzbar ist, die einen anderen Teil (15, 14) eines Bajonettverschlusses aufweist.

5. Vorrichtung nach wenigstens einem der vorhergehenden Ansprüche, **dadurch gekennzeichnet, dass** die Sicherung (6) aus einer Hülse (7) und einem Deckelelement (9) besteht, wobei das Deckelelement (9) Heizrippen (16) aufweist.

6. Vorrichtung nach Anspruch 4, **dadurch gekennzeichnet, dass** das Deckelelement (9) in die Hülse (7) eingesetzt ist.

7. Vorrichtung nach Anspruch 5, **dadurch gekennzeichnet, dass** zwischen Hülse (7) und Deckelelement (9) ein Schmelzlot eingebracht ist.

8. Vorrichtung nach wenigstens einem der Ansprüche 4 bis 6, **dadurch gekennzeichnet, dass** das Betätigungselement (5) an dem Deckelelement (9) angeordnet ist.

9. Vorrichtung nach wenigstens einem der vorhergehenden Ansprüche, **dadurch gekennzeichnet, dass** das Betätigungselement (5) von einem Kraftspeicher (11) umfangen ist, der sich einerseits ortsfest abstützt.

10. Vorrichtung nach wenigstens einem der Ansprüche 2-4, **dadurch gekennzeichnet, dass** die Sicherung (6.1,6.2) eine Bohrung (18) aufweist, in der ein Teil (17) des Betätigungselementes (5.1) geführt ist.

11. Vorrichtung nach Anspruch 10, **dadurch gekennzeichnet, dass** in der Bohrung (18) ein Einsatz (19,19.1) angeordnet ist, der auf eine Temperaturänderung reagiert.

12. Vorrichtung nach Anspruch 11, **dadurch gekennzeichnet, dass** dem Einsatz (19,19.1) ein Auslass (20,20.1) zugeordnet ist.

13. Vorrichtung nach Anspruch 11 oder 12, **dadurch gekennzeichnet, dass** das Betätigungselement (5.1) auf den Einsatz (19,19.1) drückt.

14. Vorrichtung nach Anspruch 12 oder 13, **dadurch gekennzeichnet, dass** die Weite des Auslasse (20,20.1) veränderbar ist.
